# EUROPEAN PATENT SPECIFICATION

(11) **EP 3 601 890 B1**
(45) Date of publication and mention of the grant of the patent: **10.05.2023**
(21) Application number: 18715406.7
(22) Date of filing: 15.03.2018
(51) Int. Cl.: F24D 19/10, F24D 17/00, F24D 3/10

(54) **HEAT RECLAIM WATER SYSTEM**
WÄRMERÜCKGEWINNUNGSWASSERSYSTEM
SYSTÈME D'EAU DE RÉCUPÉRATION DE CHALEUR

(30) Priority: 28.03.2017 CN 201710191123
(43) Date of publication of application: 05.02.2020
(73) Proprietor: Carrier Corporation, Jupiter, FL 33478 (US)
(72) Inventor: ZHAO, Bo, Shanghai 201206 (CN); FU, Qianli, Shanghai 201206 (CN); HU, Huan, Shanghai 201206 (CN); LIU, Qiong, Shanghai 201206 (CN)
(74) Representative: Dehns
(86) International application number: PCT/US2018/022668
(87) International publication number: WO 2018/182987

(56) References cited:
- EP-A1- 2 244 038
- EP-A2- 1 065 447
- EP-A2- 1 772 677
- DE-U1-202011 108 952
- FR-A1- 2 727 195

## Description

### TECHNICAL FIELD

The present invention relates to the field of refrigeration, and more specifically, to a hydraulic control module and a heat-recovery water system of a refrigeration device.

### BACKGROUND ART

For a conventional refrigeration system, evaporation and heat absorption is usually performed at an evaporator side to implement refrigeration, while condensation and heat dissipation is performed at a condenser side. The emitted heat is usually taken away by cooling water or air, and then is released to the external environment. Consequently, part of heat that may be reused is dissipated to no purpose. Especially, for a large-sized commercial refrigeration system, a large amount of heat is emitted due to condensation at the condenser side. Therefore, if this part of heat can be recovered to assist in heating, supplying domestic water, and the like, energy utilization of the whole system will be greatly enhanced and cost economy is improved. Currently, several heat recovery solutions have been proposed in the field of refrigeration. For example, a heat recovery branch provided with a heat-recovery heat exchanger is added, and a switch between the heat-recovery heat exchanger and a condenser is conducted according to actual application requirements, thus achieving an effect of recovering heat as required. However, for the large-sized commercial refrigeration system, arrangement space, system pipeline design, and other factors need to be further considered during design of a heat recovery solution. Therefore, how to rationally use the space and energy to construct a heat recovery system of a large-sized unit becomes a technical problem that urgently needs to be solved.

EP 1065447 A2 and FR2727195 A1 disclose a distribution manifold for a forced circulation heating system which connects radiant ducts, external radiators and a boiler.

EP 2244038 A1 discloses an air-conditioning system which includes a heat-source unit, a heat storage tank, a heat-source-side water circuit and a utilization-side water circuit, wherein the utilization-side water circuit circulates a heating-medium water between a heating radiator or a floor-heating heat exchanger This document discloses the features of the preamble of claim 1.

### SUMMARY OF THE INVENTION

An objective of the present invention is to provide a heat-recovery hydraulic control module that is highly integrated.

Another objective of the present invention is to provide a heat-recovery water system with multiple heat recovery solutions.

To achieve the objectives of the present invention, according to one aspect of the present invention, a heat-recovery water system is provided as described by claim 1.

### BRIEF DESCRIPTION OF THE DRAWINGS

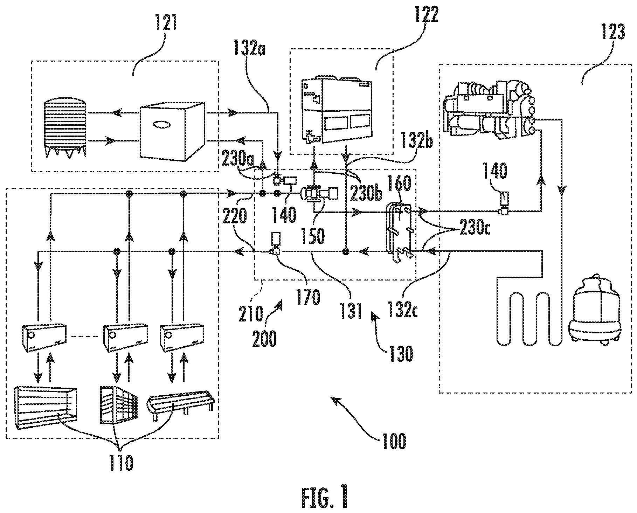

FIG. 1 is a schematic diagram showing flow paths of a heat-recovery water system and a heat exchange system associated with the heat-recovery water system according to the present invention.

### DETAILED DESCRIPTION

Referring to FIG. 1, which shows an embodiment of flow paths of a heat-recovery water system and a heat exchange system associated with the heat-recovery water system. The heat-recovery water system 100 includes: a heat emission source used for providing to-be-recovered heat; multiple heat absorption sources used for absorbing the to-be-recovered heat; and a heat-recovery flow path 130 used for heat exchange between the heat emission source and the heat absorption sources. Specifically, the heat emission source in this embodiment includes a condenser side used in a commercial refrigeration system such as a display freezer 110 or a refrigeratory. The heat-recovery flow path 130 is associated with the one or more heat emission sources via a heat-supply pipeline section 131 thereof. The heat absorption sources in this embodiment include heat absorption sides used in a domestic water loop 121, a cooling tower loop 122, and a cold-hot water unit loop 123. The heat-recovery flow path 130 is associated with the domestic water loop 121 via a backheating pipeline section 132a, associated with the cooling tower loop 122 via a backheating pipeline section 132b, and associated with the cold-hot water unit loop 123 via a backheating pipeline section 132c, respectively. The heat-recovery flow path 130 can be controlled to enable connection of the heat-supply pipeline section 131 and one or more of the backheating pipeline sections 132a, 132b, and 132c, so that all or part of heat that comes from the heat emission source and needs to be released can be absorbed by one or more of the heat absorption sources. On one hand, the water system used for dissipating heat from the display freezer system can be cooled, and consequently, the corresponding display freezer system can normally operate. On the other hand, heat-carrying water in the water system can be allocated to the heat absorption sides of the domestic water loop 121, the cooling tower loop 122, and the cold-hot water unit loop 123 as required, to provide all or part of heat required for their normal operation. Thus, this part of heat can be recovered, improving energy utilization of the whole system and bringing higher economic cost effectiveness.

Further, to improve the integration level of the heat-recovery water system and to make it easier to arrange the system, a heat-recovery hydraulic control module according to the invention is conceived. The heat-recovery hydraulic control module 200 includes a housing 210. Some or all of the heat-supply pipeline section 131 and the backheating pipeline sections 132a, 132b and 132c of the heat-recovery flow path 130 described above are arranged inside the housing 210. The heat-supply pipeline section 131 is provided with at least one pair of heat-supply pipeline joints 220 formed on the housing 210, and the multiple backheating pipeline sections are respectively provided with multiple pairs of backheating pipeline joints 230a, 230b and 230c formed on the housing 210. Optionally, a heat-supply pipeline water pump 170 for supplying power may be further disposed on the heat-supply pipeline section 131. By means of the foregoing arrangement, the heat absorption source and the heat emission source can be rapidly connected or disconnected as required, thus greatly enhancing convenience and applicability of the system.

It should be noted that the domestic water loop 121, the cooling tower loop 122, and the cold-hot water unit loop 123 in this embodiment are merely some examples of the heat absorption source. Actually, a variety of heat exchange systems that need to absorb heat during operation can all be associated with the heat-recovery water system mentioned in this embodiment.

On the basis of the above embodiment, in order to further enhance the heat utilization, the heat absorption sources may be further classified according to requirements of these heat absorption sources on the temperature of heat-carrying mediums, and their arrangements are then optimized. According to the invention, the heat absorption sources include a first-type heat absorption source and a second-type heat absorption source, wherein the first-type heat absorption source has a higher temperature requirement than the second-type heat absorption source, that is, the first-type heat absorption source can exchange heat with a medium with higher temperature and can better acquire heat from the medium with higher temperature. On the basis of such classification, it can be known that, on the one hand, in a series connection manner, the backheating pipeline sections associated with the first-type heat absorption source can be arranged on the upstream side of the backheating pipeline sections associated with the second-type heat absorption source, such that the heat can be better recovered. On the other hand, in a parallel connection manner, the multiple backheating pipeline sections associated with the first-type heat absorption source can be successively connected in parallel to the heat-supply pipeline section, and the multiple backheating pipeline sections associated with the second-type heat absorption source can be successively connected in parallel to the heat-supply pipeline section, such that the heat can also be better recovered.

Referring to the embodiment shown in FIG. 1, the first-type heat absorption source includes the domestic water loop 121, and the second-type heat absorption source includes the cooling tower loop 122 and the cold-hot water unit loop 123. In the heat-recovery flow path 130, the cooling tower loop 122 and the cold-hot water unit loop 123 that both belong to the second-type heat absorption source are connected to the flow path in parallel, and the domestic water loop 121 is connected in series to the upstream side of the second-type heat absorption sources, thus further optimizing heat recovery.

Furthermore, the domestic water loop 121 includes a water source heat pump and a water tank. Hot water in the backheating pipeline sections is raised by the water source heat pump and is stored in the water tank as high-temperature domestic water. However, the cooling tower loop 122 is a closed cooling tower, and working water in the backheating pipeline sections directly enters the cooling tower loop to perform heat exchange. In addition, the cold-hot water unit loop 123 includes a water-cooled cold-hot water unit, and a water source heat pump or an open-type cooling tower. The circulating water applied in the cold-hot water unit loop 123 exchanges heat with the working water in the backheating pipeline sections via a plate-type heat exchanger 160. The circulating water absorbs heat herein and then enters the cold-hot water unit loop 123 to participate in the operation.

In this embodiment, it is necessary to set a valve in order to individually control make-and-break of the backheating pipeline sections. The following describes several optimized valve setting manners. For example, an electric three-way valve 150 is disposed at a parallel connection point of the cooling tower loop 122 and the cold-hot water unit loop 123, to regulate a ratio of flows through the two loops or alternatively enable connection of one of the two loops.

In this embodiment, it is necessary to set a drive device in order to draw the hot water from the heat-supply pipeline section 131 to the backheating pipeline sections 132a, 132b and 132c. For example, a domestic water pump 140 may be set in the backheating pipeline section 132a. The domestic water pump 140 and a heat-supply pipeline pump in the heat-supply pipeline section 131 together form a secondary pump system and share a section of a common pipeline used for coupling. The domestic water pump 140 is used to draw the hot water from the heat-supply pipeline section 131 to the backheating pipeline section 132a. It should be noted that the similar arrangement may also be applied in other backheating pipeline sections.

A working process of the heat-recovery water system will be described below with reference to the foregoing embodiments.

In an operation state of a low-temperature display freezer, a refrigerant absorbs heat and then flows to the condenser side for heat dissipation. Driven by the pump 170, the working water in the heat-recovery flow path 130 exchanges heat with the refrigerant in the condenser side of the low-temperature display freezer system, to acquire heat from the refrigerant. The heat-carrying working water flows to the heat-supply pipeline section 131. Afterwards, the place to which the heat-carrying working water is delivered can be determined according to whether the domestic water loop 121, the cooling tower loop 122 and the cold-hot water unit loop 123 are joined to the corresponding backheating pipeline sections 132a, 132b and 132c. When the domestic water loop 121 is joined to the corresponding pipeline section, the domestic water pump 140 on the loop may be turned on. Driven by the pump, the hot water in the heat-supply pipeline section 131 is guided into the backheating pipeline section 132a, performs heat exchange in the water source heat pump of the domestic water loop 121, and is then stored in the water tank as high-temperature domestic water. Then, after the electric three-way valve 150 is switched to enable connection of the backheating pipeline section 132b, the working water that has undergone the first heat exchange enters the cooling tower loop 122, and the working water in the backheating pipeline section 132b directly enters the cooling tower loop 122 for heat exchange. Alternatively, after the electric three-way valve 150 is switched to enable connection of the backheating pipeline section 132c, the working water that has undergone the first heat exchange enters the plate-type heat exchanger 160. The circulating water used in the cold-hot water unit loop 123 also enters the plate-type heat exchanger 160, and exchanges heat with the working water in the backheating pipeline section. After absorbing heat, the circulating water enters the cold-hot water unit loop 123 to participate in the operation. Specifically, when a cold-hot water unit in the cold-hot water unit loop 123 carries out a heating mode, this part of heat can be directly used to assist in heating for the cold-hot water unit. However, when the cold-hot water unit in the cold-hot water unit loop 123 carries out a refrigeration mode or does not operate, this part of heat can be directly released to the environment by the open-type cooling tower in the cold-hot water unit loop 123, and thus heat recovery or release is completed through the foregoing process. The working water from which the heat is completely released flows back to the condenser side of the low-temperature display freezer system through the heat-supply pipeline section 131, to start a new cycle of operation.

The foregoing examples mainly describe a heat-recovery hydraulic control module and a heat-recovery water system of the present invention. Although only some embodiments of the present invention are described, those of ordinary skill in the art should understand that the present invention can be implemented in many other forms without departing from the idea and scope of the present invention. Therefore, the described examples and embodiments are considered to be illustrative rather than restrictive, and various modifications and replacements may be made to the present invention without departing from the scope of the present invention defined in the appended claims.

## Claims

1. A heat-recovery water system (100), comprising:
a heat emission source (110), used for providing to-be-recovered heat;
multiple heat absorption sources (121, 122, 123), used for absorbing the to-be-recovered heat; and
a heat-recovery flow path (130), comprising a heat-supply pipeline section (131) associated with the heat emission source and multiple backheating pipeline sections (132a, 132b, 132c) associated with the multiple heat absorption sources; wherein
the heat-recovery flow path is controlled to enable connection of the heat-supply pipeline section and one or more of the backheating pipeline sections;
the heat absorption source comprises a first-type heat absorption source (121) and a second-type heat absorption source (122, 123), the first-type heat absorption source having a higher temperature requirement than the second-type heat absorption source, and
the heat emission source (110) comprises a condenser heat-dissipation water loop of a water-cooled compression condensing unit, **characterized by**:
a hydraulic control module (200), wherein the hydraulic control modules comprises a housing (210) and wherein the heat-recovery flow path (130) being arranged inside the housing, the heat-supply pipeline section (131) being provided with at least one pair of heat-supply pipeline joints (220) formed on the housing, and the multiple backheating pipeline sections (132a, 132b, 132c) being respectively provided with a backheating pipeline joint (230a, 230b, 230c) formed on the housing.

2. The heat-recovery water system (100) according to claim 1, wherein the multiple backheating pipeline sections (132a, 132b, 132c) are successively connected in series to the heat-supply pipeline section (131), the backheating pipeline sections (132a) associated with the first-type heat absorption source (121) being arranged on the upstream side, and the backheating pipeline sections (132b, 132c) associated with the second-type heat absorption source (122, 123) being arranged on the downstream side.

3. The heat-recovery water system (100) according to claim 2, wherein a second water pump is provided on the backheating pipeline section (132a) associated with the first-type heat absorption source (121), and the second water pump is used to draw water from the heat-supply pipeline section (131) to the backheating pipeline section associated with the first-type heat absorption source.

4. The heat-recovery water system (100) according to any of claims 2 or 3, wherein the multiple backheating pipeline sections (132a) associated with the first-type heat absorption source (121) are connected in parallel to the heat-supply pipeline section (131); and/or the multiple backheating pipeline sections (132b, 132c) associated with the second-type heat absorption source (122, 123) are connected in parallel to the heat-supply pipeline section.

5. The heat-recovery water system (100) according to claim 4, wherein a multi-way valve (150) is disposed at a parallel connection point of the multiple backheating pipeline sections (132a, 132b, 132c), the multi-way valve being used for regulating a ratio of flows through the backheating pipeline sections and/or performing a switch between connection and disconnection of the backheating pipeline sections.

6. The heat-recovery water system (100) according to any of claims 2 or 3, wherein the first-type heat absorption source (121) comprises a domestic water loop; and/or the second-type heat absorption source comprises a cooling tower loop (122) and/or a cold-hot water unit loop (123).

7. The heat-recovery water system (100) according to claim 6, wherein the cooling tower loop (122) is a closed cooling tower.

8. The heat-recovery water system (100) according to claim 6 or 7, wherein the cold-hot water unit loop (123) comprises a water-cooled cold-hot water unit, and a water source or an open-type cooling tower.

9. The heat-recover water system (100) according to any of claims 1 to 3, wherein a first water pump for supplying power is provided on the heat-supply pipeline section (131).

## Patentansprüche

1. Wasser-Wärmerückgewinnungssystem (100), umfassend:
eine Wärmeabgabequelle (110), die zum Bereitstellen von zurückzugewinnender Wärme verwendet wird;
mehrere Wärmeabsorptionsquellen (121, 122, 123), die zum Absorbieren der zurückzugewinnenden Wärme verwendet werden; und
einen Wärmerückgewinnungs-Strömungspfad (130), der einen Wärmezufuhr-Rohrleitungsabschnitt (131) umfasst, der mit der Wärmeabgabequelle assoziiert ist, und mehrere Rückheiz-Rohrleitungsabschnitte (132a, 132b, 132c), die mit den mehreren Wärmeabsorptionsquellen assoziiert sind; wobei
der Wärmerückgewinnungsströmungspfad gesteuert wird, um eine Verbindung des Wärmezufuhr-Rohrleitungsabschnitts und eines oder mehrerer der Rückheiz-Rohrleitungsabschnitte zu ermöglichen;
die Wärmeabsorptionsquelle umfasst eine Wärmeabsorptionsquelle (121) ersten Typs und eine Wärmeabsorptionsquelle (122, 123) zweiten Typs, wobei die Wärmeabsorptionsquelle ersten Typs eine höhere Temperaturanforderung als die Wärmeabsorptionsquelle zweiten Typs aufweist, und
die Wärmeabgabequelle (110) einen Kondensator-Wärmeableitungs-Wasserkreislauf einer wassergekühlten Kompressionskondensationseinheit umfasst, **gekennzeichnet durch**:
ein hydraulisches Steuermodul (200), wobei die hydraulischen Steuermodule ein Gehäuse (210) umfassen, und wobei der Wärmerückgewinnungs-Strömungspfad (130) in dem Gehäuse eingerichtet ist, wobei der Wärmezufuhr-Rohrleitungsabschnitt (131) mit mindestens einem Paar von Wärmezufuhr-Rohrleitungsanschlüssen (220), die an dem Gehäuse gebildet sind, versehen ist, und die mehreren Rückheiz-Rohrleitungsabschnitte (132a, 132b, 132c) jeweils mit einem Rückheiz-Rohrleitungsanschluss (230a, 230b, 230c), der an dem Gehäuse gebildet ist, versehen sind.

2. Wasser-Wärmerückgewinnungssystem (100) nach Anspruch 1, wobei die mehreren Rückheiz-Rohrleitungsabschnitte (132a, 132b, 132c) nacheinander in Reihe mit dem Wärmezufuhr-Rohrleitungsabschnitt (131) verbunden sind, und die Rückheiz-Rohrleitungsabschnitte (132a), die mit der Wärmeabsorptionsquelle (121) ersten Typs assoziiert sind, an der stromaufwärtigen Seite eingerichtet sind, und die Rückheiz-Rohrleitungsabschnitte (132b, 132c), die mit der Wärmeabsorptionsquelle zweiten Typs (122, 123) assoziiert sind, an der stromabwärtigen Seite eingerichtet sind.

3. Wasser-Wärmerückgewinnungssystem (100) nach Anspruch 2, wobei eine zweite Wasserpumpe an dem Rückheiz-Rohrleitungsabschnitt (132a), der mit der Wärmeabsorptionsquelle ersten Typs (121) assoziiert ist, bereitgestellt ist, und die zweite Wasserpumpe verwendet wird, um Wasser aus dem Wärmezufuhr-Rohrleitungsabschnitt (131) zu dem Rückheiz-Rohrleitungsabschnitt, der mit der Wärmeabsorptionsquelle ersten Typs assoziiert ist, zu entnehmen.

4. Wasser-Wärmerückgewinnungssystem (100) nach einem der Ansprüche 2 oder 3, wobei die mehreren Rückheiz-Rohrleitungsabschnitte (132a), die mit der Wärmeabsorptionsquelle (121) ersten Typs assoziiert sind, an dem Wärmezufuhr-Rohrleitungsabschnitt (131) parallel verbunden sind; und/oder die mehreren Rückheiz-Rohrleitungsabschnitte (132b, 132c), die mit der Wärmeabsorptionsquelle zweiten Typs (122, 123) assoziiert sind, an dem Wärmezufuhr-Rohrleitungsabschnitt parallel verbunden sind.

5. Wasser-Wärmerückgewinnungssystem (100) nach Anspruch 4, wobei ein Mehrwegeventil (150) an einer parallelen Verbindungsstelle der mehreren Rückheiz-Rohrleitungsabschnitte (132a, 132b, 132c) angeordnet ist, wobei das Mehrwegeventil zum Regulieren eines Verhältnisses von Strömen durch die Rückheiz-Rohrleitungsabschnitte und/oder Durchführen eines Umschaltens zwischen Verbindung und Trennung der Rückheiz-Rohrleitungsabschnitte verwendet wird.

6. Wasser-Wärmerückgewinnungssystem (100) nach einem der Ansprüche 2 oder 3, wobei die Wärmeabsorptionsquelle ersten Typs (121) einen Brauchwasserkreislauf umfasst; und/oder die Wärmeabsorptionsquelle zweiten Typs einen Kühlturmkreislauf (122) und/oder einen Kalt-Warmwasser-Einheitskreislauf (123) umfasst.

7. Wasser-Wärmerückgewinnungssystem (100) nach Anspruch 6, wobei der Kühlturmkreislauf (122) ein geschlossener Kühlturm ist.

8. Wasser-Wärmerückgewinnungssystem (100) nach Anspruch 6 oder 7, wobei der Warm-Kaltwasser-Einheitskreislauf (123) eine wassergekühlte Kalt-Warmwassereinheit und eine Wasserquelle oder einen Kühlturm offenen Typs umfasst.

9. Wasser-Wärmerückgewinnungssystem (100) nach einem der Ansprüche 1 bis 3, wobei eine erste Wasserpumpe zum Zuführen von Leistung an dem Wärmezufuhr-Rohrleitungsabschnitt (131) bereitgestellt ist.

## Revendications

1. Système d'eau de récupération de chaleur (100), comprenant :
une source d'émission de chaleur (110) utilisée pour fournir de la chaleur à récupérer ;
de multiples sources d'absorption de chaleur (121, 122, 123) utilisées pour absorber la chaleur à récupérer ; et
un trajet d'écoulement de récupération de chaleur (130) comprenant une section de pipeline d'alimentation en chaleur (131) associée à la source d'émission de chaleur et de multiples sections de pipeline de chauffage par bombardement de retour (132a, 132b, 132c) associées aux multiples sources d'absorption de chaleur ; dans lequel
le trajet d'écoulement de récupération de chaleur est commandé pour permettre la connexion de la section de pipeline d'alimentation en chaleur et des une ou plusieurs des sections de pipeline de chauffage par bombardement de retour ;
la source d'absorption de chaleur comprend une source d'absorption de chaleur du premier type (121) et une source d'absorption de chaleur du second type (122, 123), la source d'absorption de chaleur du premier type présentant une exigence de température supérieure à celle de la source d'absorption de chaleur du second type, et
la source d'émission de chaleur (110) comprend une boucle d'eau de dissipation de chaleur de condensateur d'une unité de condensation de compression refroidie par l'eau, **caractérisé par** :
un module de commande hydraulique (200), dans lequel le module de commande hydraulique comprend un boîtier (210) et dans lequel le trajet d'écoulement de récupération de chaleur (130) étant agencé à l'intérieur du boîtier, la section de pipeline d'alimentation en chaleur (131) étant dotée d'au moins une paire de joints de pipeline d'alimentation en chaleur (220) formés sur le boîtier, et les multiples sections de pipeline de chauffage par bombardement de retour (132a, 132b, 132c) étant respectivement dotées d'un joint de pipeline de chauffage par bombardement de retour (230a, 230b, 230c) formé sur le boîtier.

2. Système d'eau de récupération de chaleur (100) selon la revendication 1, dans lequel les multiples sections de pipeline de chauffage par bombardement de retour (132a, 132b, 132c) sont successivement reliées en série à la section de pipeline d'alimentation en chaleur (131), les sections de pipeline de chauffage par bombardement de retour (132a) associées à la source d'absorption de chaleur du premier type (121) étant agencées sur le côté amont, et les sections de pipeline de chauffage par bombardement de retour (132b, 132c) associées à la source d'absorption de chaleur du second type (122, 123) étant agencées sur le côté aval.

3. Système d'eau de récupération de chaleur (100) selon la revendication 2, dans lequel une seconde pompe à eau est prévue sur la section de pipeline de chauffage par bombardement de retour (132a) associée à la source d'absorption de chaleur du premier type (121), et la seconde pompe à eau est utilisée pour aspirer de l'eau depuis la section de pipeline d'alimentation en chaleur (131) à la section de pipeline de chauffage par bombardement de retour associée à la source d'absorption de chaleur du premier type.

4. Système d'eau de récupération de chaleur (100) selon l'une quelconque des revendications 2 ou 3, dans lequel les multiples sections de pipeline de chauffage par bombardement de retour (132a) associées à la source d'absorption de chaleur du premier type (121) sont reliées en parallèle de la section de pipeline d'alimentation en chaleur (131) ; et/ou les multiples sections de pipeline de chauffage par bombardement de retour (132b, 132c) associées à la source d'absorption de chaleur du second type (122, 123) sont reliées en parallèle de la section de pipeline d'alimentation en chaleur.

5. Système d'eau de récupération de chaleur (100) selon la revendication 4, dans lequel une soupape multivoies (150) est disposée en un point de connexion parallèle des multiples sections de pipeline de chauffage par bombardement de retour (132a, 132b, 132c), la soupape multivoies étant utilisée pour réguler un rapport de flux à travers les sections de pipeline de chauffage par bombardement de retour et/ou réaliser une commutation entre la connexion et la déconnexion des sections de pipeline de chauffage par bombardement de retour.

6. Système d'eau de récupération de chaleur (100) selon l'une quelconque des revendications 2 ou 3, dans lequel la source d'absorption de chaleur du premier type (121) comprend une boucle d'eau domestique; et/ou la source d'absorption de chaleur du second type comprend une boucle de tour de refroidissement (122) et/ou une boucle d'unité d'eau froide-chaude (123).

7. Système d'eau de récupération de chaleur (100) selon la revendication 6, dans lequel la boucle de tour de refroidissement (122) est une tour de refroidissement fermée.

8. Système d'eau de récupération de chaleur (100) selon la revendication 6 ou 7, dans lequel la boucle d'unité d'eau froide-chaude (123) comprend une unité d'eau froide-chaude refroidie par l'eau, et une source d'eau ou une tour de refroidissement du type ouvert.

9. Système d'eau de récupération de chaleur (100), selon l'une quelconque des revendications 1 à 3, dans lequel une première pompe à eau pour l'alimentation en énergie est prévue sur la section de pipeline d'alimentation en chaleur (131).
